# EUROPEAN PATENT SPECIFICATION

(11) **EP 2 330 176 B1**
(45) Date of publication and mention of the grant of the patent: **21.08.2013**
(21) Application number: 09800431.0
(22) Date of filing: 23.07.2009
(51) Int. Cl.: C10M 105/38, C09K 5/04, F25B 1/00, F25B 1/04, C10N 30/00, C10N 30/10, C10N 30/14, C10N 40/30, C10M 171/00, F25B 9/00

(54) **REFRIGERATION CIRCUIT**
KÄLTEKREISLAUF
CIRCUIT DE RÉFRIGÉRATION

(30) Priority: 24.07.2008 JP 2008190858
(43) Date of publication of application: 08.06.2011
(73) Proprietor: Sanden Corporation, Isesaki-shi Gunma 372-8502 (JP)
(72) Inventor: KAMISHIMA Hiromitsu, Isesaki-shi Gunma 372-8502 (JP); MATSUZAKI Tomoaki, Isesaki-shi Gunma 372-8502 (JP); MATSUMOTO Yuuichi, Isesaki-shi Gunma 372-8502 (JP)
(74) Representative: Prüfer & Partner GbR European Patent Attorneys
(86) International application number: PCT/JP2009/063170
(87) International publication number: WO 2010/010917

(56) References cited:
- WO-A1-2009/018117
- WO-A1-2009/114398
- WO-A1-2010/146841
- WO-A2-2007/002625
- WO-A2-2007/002625
- JP-A- 2005 171 233
- JP-A- 2005 171 233
- JP-A- 2006 342 755
- JP-A- 2006 342 755

## Description

### Technical Field of the Invention

The present invention relates to a refrigeration cycle, and specifically relates to a refrigeration cycle using R1234yf for refrigerant.

### Background Art of the Invention

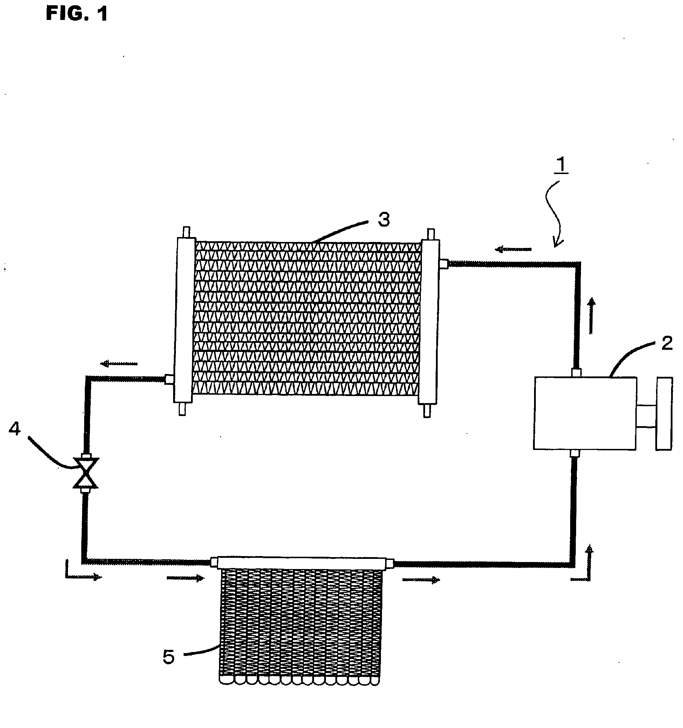

A refrigeration cycle used in an automotive air conditioning system, etc., is basically configured as shown in Fig. 1. In Fig. 1, refrigeration circuit 1 has a compressor 2 compressing refrigerant, a condenser 3 condensing compressed refrigerant, an expansion valve 4 as a decompression/expansion means decompressing and expanding condensed refrigerant and an evaporator 5 evaporating decompressed and expanded refrigerant. The refrigerant is circulated in refrigeration circuit 1 as changing its state. In such refrigeration circuit 1, R134a is used as typical refrigerant at present and polyalkylene glycol (PAG) is generally used as lubricating oil.

For the R134a, etc., as a conventional typical refrigerant, research and development for a new refrigerant is being performed as disclosed in Non-patent document 1, aiming at further improvement of the global warming potential (GWP), etc. R1234yf has been recently announced as the new refrigerant aiming such an improvement (see for example patent document 1). And the research and development can be performed even for the application to a refrigeration cycle used in an automotive air conditioning system, etc.

Use of scroll compressors in air conditions is known from for example patent document 2. Use of polyol esters and hindered polyol esters as lubricants in refrigeration machines is known from patent document 3. Patent document 4 relates to the use of chloro-trifluoropropenes as refrigerants and methods of replacing an existing refrigerant in a chiller with chlorotrifluoropropenes, wherein additional refrigerant selected from inter alia hydrofluoroolefins such as R1234yf can be contained in refrigerant compositions. Patent document 5 discloses compositions comprising R1225ye and other compounds, inter alia R1234yf, that are useful as heat transfer fluids, including refrigerants.

### Prior art documents

### Non-patent and patent documents

Non-patent document 1: Refrigeration, Vol. 83, No. 965, March issue, 2008
Patent document 1: WO 2007/002625.
Patent document 2: JP 2006-342755.
Patent document 3: JP 2005-171233.
Patent document 4: WO 2009/114398.
Patent document 5: WO 2009/018117.

### Summary of the Invention

### Problems to be solved by the Invention

However, because R1234yf has lower chemical stability in comparison with R134a, hydrogen fluoride as a strong acid might be generated by deterioration or denaturalization of the refrigerant. Therefore, tests are required to sufficiently confirm the safety by testing for a practical application of a refrigeration cycle using R1234yf as refrigerant because some members and lubricating oil which have been generally used in a conventional refrigeration circuit might be degraded or denaturalized. Actually, an experiment has revealed the fact that paraffin is generated in a refrigeration circuit under a high-speed and high-load condition when a refrigeration cycle with a scroll-type compressor uses R1234yf as refrigerant and polyalkylene glycol as lubricating oil, as will be explained in detail in the later described test example. Such an undesirable reaction product might be precipitated on a low-temperature part of the refrigeration circuit, which may cause troubles, such as a choke in the refrigeration circuit and deterioration of the refrigeration performance. Therefore, it is necessary to realize a configuration that can prevent undesirable reaction products from precipitating in the circuit even under a high-speed and high-load condition when R1234yf is used as refrigerant in the refrigeration circuit.

Accordingly, an object of the present invention is to provide a refrigeration circuit, which has a scroll type compressor and uses R1234yf as refrigerant, being able to prevent undesirable reaction products from precipitating in the circuit under a high-speed and high-load condition so as to keep a stable refrigeration performance.

### Means for solving the Problems

To achieve the above objects, the present invention provides a refrigeration circuit provided with a scroll compressor for compressing a refrigerant, characterized in that R1234yf is used as said refrigerant, and a polyol ester is used as a lubricating oil for said refrigeration circuit.

According to this refrigeration circuit, since polyol ester is used as lubricating oil, undesirable reaction products precipitated by chemical reactions between lubricating oil and the refrigerant R1234yf or its ingredients generated by decomposition (for example, hydrogen fluoride) in the refrigeration circuit can be prevented from accumulating, it is possible to maintain a stable refrigeration performance even through a long-term operation. As particularly described in experimental results below, in a refrigeration circuit provided with a scroll compressor for compressing refrigerant, when R1234yf is used as refrigerant and polyalkylene glycol which is formerly known as a general lubricating oil is used, a phenomenon of paraffin precipitation in the refrigeration circuit may be observed under a high-speed and high-load operational condition, and the phenomenon may cause problems such as a clog of the refrigeration circuit or deterioration of refrigeration performance. Meanwhile, it has been confirmed by the experimental result below that paraffin is not generated even under a high-speed and high-load operational condition, when polyol ester is used as lubricating oil under the same condition. Namely, in a refrigeration circuit which has a scroll compressor as a compressor and uses R1234yf as refrigerant, using polyol ester as lubricating oil can prevent generating undesirable reaction products, so as to achieve an operational stability as before. Although it has been known that polyol ester is applicable for lubricating oil (patent document 3), a case where polyol ester is used in a refrigeration circuit using refrigerant R1234yf is not known, and a case associating polyol ester with a creation of paraffin is also not found.

A major component of polyol ester according to the present invention is, although it is not particularly limited, preferably a compound which has no ether bond. As described above, in a refrigeration circuit provided with a scroll compressor using refrigerant R1234yf, when polyalkylene glycol is used as lubricating oil, it has been confirmed that paraffin is generated in the refrigeration circuit. Polyalkylene glycol is a polyether which has a number of ether bonds in a molecule. Meanwhile, the experimental results below confirm that formation reactions of paraffin does not occur when using polyol ester, which is an ester compound with a polyhydric alcohol and an organic acid. Most of such polyol esters have no ether bond or few ether bonds in a molecule. As indicated in these experimental results, in a refrigeration circuit using refrigerant R1234yf, it is appropriate to presume that chemical reactions with ether bonds contribute to creation of paraffin. Therefore, by using compounds having no ether bond as lubricating oil, it is possible that creation of paraffin is inhibited and precipitation of undesirable reaction products is prevented. However, the present invention does not prohibit the use of compounds having ether bonds, and it is possible that lubricating oil contains some compounds having ether bonds unless a failure occurs under a high-speed and high-load operational condition.

Further, polyol ester according to the present invention is, although it is not particularly limited, preferably a hindered ester comprising a hindered alcohol. Normally, alcohol is unstable against heat or acid because a hydrogen atom bound to carbon at the beta position, which is the second position counted from hydroxyl group OH, has high reactivity. Meanwhile, hindered alcohol and hindered ester consisting thereof have beta carbon with no bonds to hydrogen, and have characteristics of high thermal stability relative to normal alcohol. Therefore, in a refrigeration circuit with possibly high-temperature refrigerant, by using hindered ester, which has high thermal stability, as lubricating oil, it is possible to achieve stable refrigeration performance even under a high-speed and high-load operational condition.

The above-described hindered alcohol, although it is not particularly limited, can be one selected from the group consisting of neopentyl glycol, trimethylolethane, trimethylolpropane, trimethylolbutane, pentaerythritol and dipentaerythritol. By using such a hindered alcohol, polyol ester with high thermal stability can be obtained.

Further, polyol ester according to the present invention, although it is not particularly limited, preferably comprises at least one compound selected from the group consisting of linear or branched fatty acids having a carbon number in a range of 5 to 18. Physical properties of polyol esters, such as viscosity, hydrolysis resistance and stability at high temperature, are affected by the structures of carbon chains of fatty acids which are sources of the polyol esters. Namely, physical properties of polyol esters, which are made synthetically from fatty acid as raw material, can be regulated by changing the length of carbon chain in a linear fatty acid. The physical properties can be also regulated by changing parameters, such as the length, the position and the number of branches, in a branched fatty acid. Therefore, by choosing suitable fatty acid from the aforementioned range, it is possible to obtain polyol ester with suitable physical properties for desired refrigeration circuit. However, organic acid as raw material of polyol ester according to the present invention is not limited to the above-described fatty acids, and any kind of organic acids can be applicable for the present invention.

In addition, the lubricating oil in the present invention may contain an additive. The additive may comprise an agent, such as an extreme pressure agent, an acid capturing agent, an antioxidant and a metal deactivating agent, though the additive can be even the other one. Those additive agents can prevent troubles which may be caused in the refrigeration circuit under various conditions, so as to maintain the performance of the refrigeration circuit. For example, an extreme pressure agent as an additive agent can be added to keep the slipping performance of the lubricating oil even under a high-pressure condition, so as to prevent components from abrasion and burning. In addition, an additive agent, such as acid capturing agent, antioxidant and metal deactivating agent, can be added to inhibit an undesirable chemical reaction which may be caused by a resolved component of the refrigerant or the lubricating oil. Thus refrigerant leakage derived from resolution or deterioration of component members of the refrigeration circuit can be prevented, as well as troubles, such as a choke in the refrigeration circuit and deterioration of the refrigeration performance, which may be caused by the precipitation of undesirable products in the refrigeration circuit. In addition, additive agents of the lubricating oil in the present invention may be not only the above-described agents for maintaining the performance of the refrigeration circuit but also the other various kinds of additive agent.

The refrigeration circuit according to the present invention is suitable for a refrigeration circuit for an automotive air conditioning system. The present invention can be applied to refrigeration circuit for an automotive air conditioning system, so as to realize a refrigeration circuit which can reduce the environmental load and can achieve a conventional operation stability.

### Effect according to the Invention

Thus a refrigeration circuit according to the present invention can prevent an undesirable reaction product from precipitating so that a trouble such as a choke and refrigeration performance deterioration is prevented in a refrigeration circuit which is provided with a scroll compressor and in which R1234yf is used as refrigerant. Therefore, the present invention can make it possible to realize a refrigeration circuit which can reduce environmental load in comparison with a conventional circuit and can achieve a conventional operation stability.

### Brief explanation of the drawings

[Fig. 1] Fig. 1 is a schematic framework showing a basic equipment layout of a refrigeration circuit as an object of the present invention.
[Fig. 2] Fig. 2 is a FT-IR (Fourier transform infrared) absorption spectrum of lubricating oil used in a confirmatory experiment of the effect of the present invention in the range of 4000 cm⁻¹ to 700 cm⁻¹.
[Fig. 3] Fig. 3 is a FT-IR absorption spectrum of lubricating oil used in a confirmatory experiment of the effect of the present invention in the range of 900 cm⁻¹ to 700 cm⁻¹.
[Fig. 4] Fig. 4 is a FT-IR absorption spectrum of paraffin taken at an experiment based on conventional technology for comparison in the range of 4000 cm⁻¹ to 700 cm^{-1 1}.
[Fig. 5] Fig. 5 is a DSC (Differential Scanning Calorimetry) chart of paraffin taken at an experiment based on conventional technology for comparison.
[Fig. 6] Fig. 6 is a GC-MS (Gas Chromatograph Mass Spectrometry) chart of paraffin taken at an experiment based on conventional technology for comparison.

### Embodiments for carrying out the Invention

Hereinafter, the present invention will be explained concretely using Experimental Examples including Practical Examples and Comparative Examples though they do not limit the scope of the present invention.

### Practical Examples

In the following sentences, presence or absence of precipitation of paraffin in a refrigeration circuit provided with a scroll compressor for compressing refrigerant at a condition where R1234yf is used as refrigerant will be explained as referring to experimental results, under a condition that polyol ester is used as the refrigerant machine oil and under a condition that polyalkylene glycol is used as the conventional example for comparison. Operating conditions of the refrigeration circuit and samples in the experiments were set up as follows. Meanwhile, paraffin wax in sample (F) is detected only by the filtration of the lubricating oil of sample (E), and not by the filtrations of the lubricating oil of samples (A) to (D).

### [Operating Conditions]

High-Speed and High-Load Operation: A refrigeration circuit provided with a scroll compressor using R1234yf as refrigerant is operated continuously for about 400 hours at more than 6,000 rotations per minute.
Low-Speed and High-Load Operation: A refrigeration circuit provided with a scroll compressor using R1234yf as refrigerant is operated continuously for about 400 hours at less than 1,500 rotations per minute.

### [Samples]

(A) POE before experiment: The polyol ester is picked before the high-load experiment.
(B) POE after experiment (High-Speed and High-Load Operation): After a refrigeration circuit using polyol ester as lubricating oil is operated under a condition of the above-described High-Speed and High-Load Operation, the residual polyol ester in the refrigeration circuit is picked.
(C) PAG before experiment: The polyalkylene glycol is picked before the high-load experiment.
(D) PAG after experiment (Low-Speed and High-Load Operation): After a refrigeration circuit using polyalkylene glycol as lubricating oil is operated under a condition of the above-described Low-Speed and High-Load Operation, the residual polyalkylene glycol in the refrigeration circuit is picked.
(E) PAG after experiment (High-Speed and High-Load Operation): After a refrigeration circuit using polyalkylene glycol as lubricating oil is operated under a condition of the above-described High-Speed and High-Load Operation, the residual polyalkylene glycol in the refrigeration circuit is picked.
(F) Paraffin Wax: After the above-described experiment (E), the residual polyalkylene glycol in the refrigeration circuit is filtered, and white substances deposited on the filter are picked.

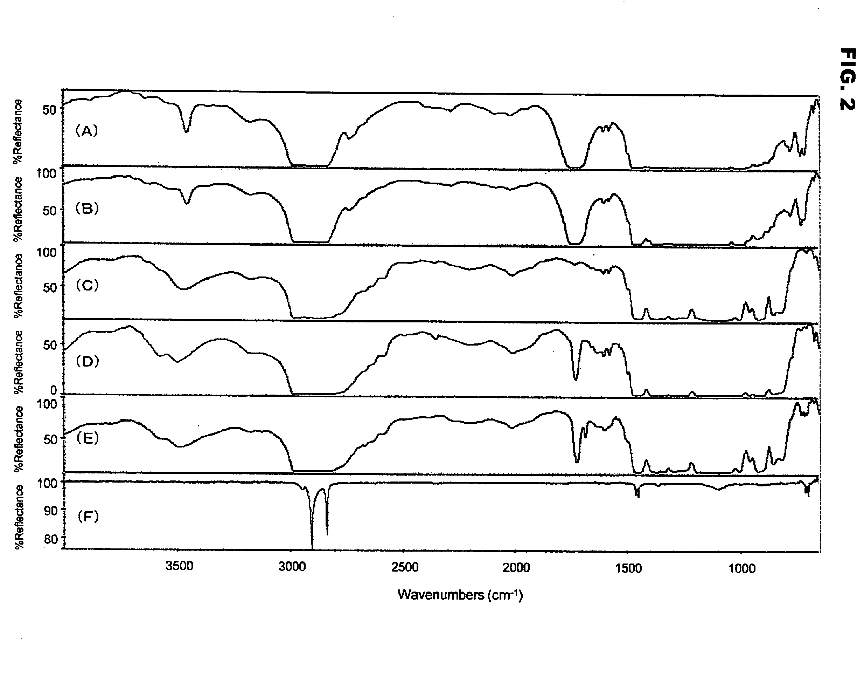

Fig. 2 shows the results of FT-IR (Fourier transform infrared) analysis according to aforementioned 6 samples. Comparing (A) with (B), both of which use polyol ester as lubricating oil, these 2 samples show almost the same IR spectrums, and the molecular structures of compositions in these samples do not change. Meanwhile, comparing the spectrums of (C), (D) and (E), all of which use polyalkylene glycol as lubricating oil, there is only a slight difference between the spectrum of (C) and (D), although there is absorption near 720-730 cm⁻¹ in the spectrum of (E) compared with other two spectrums. This absorption is observed similarly in the IR spectrum of paraffin sample (F). In other words, these experimental results show that paraffin (F) is produced in the sample (E) which uses polyalkylene glycol under a high-speed and high-load condition, while the sample (C) before the experiment and the sample (D) under a low-speed and high-load condition do not include paraffin.

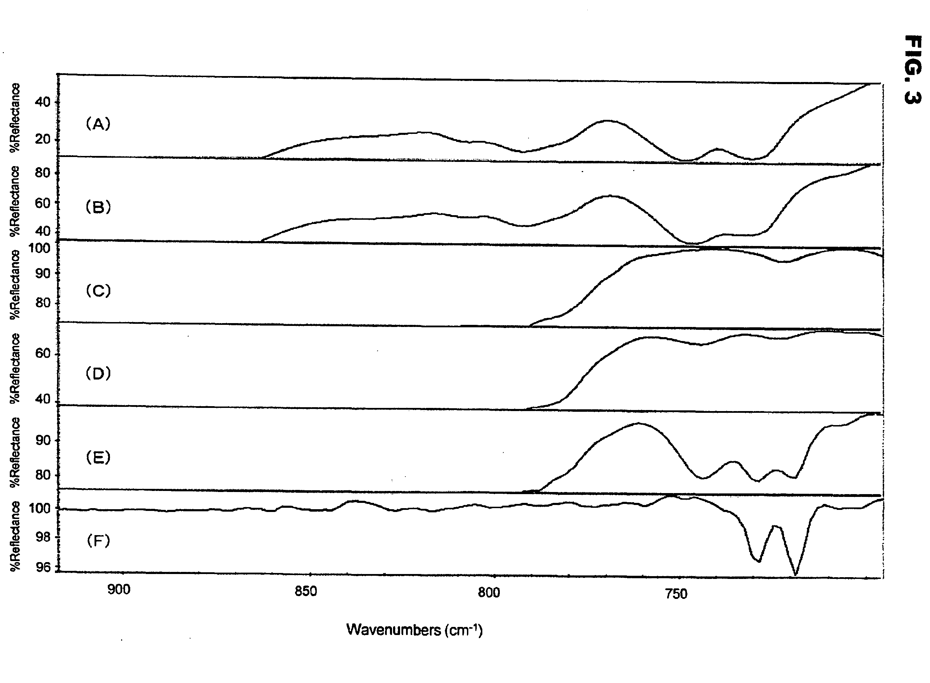

Fig. 3 shows an enlarged view of the aforementioned result of FT-IR analysis in a range from 900 cm⁻¹ to 700 cm⁻¹. As is the case with the result aforementioned, in the comparison with (A) and (B), both of which use polyol ester as lubricating oil, there is only a slight difference between absorption spectrums and the molecular structures do not change. Meanwhile, in the comparison among (C), (D) and (E), all of which use polyalkylene glycol as lubricating oil, only the spectrum of (E) shows absorption near 720-730 cm⁻¹, and the absorption is observed similarly in the IR spectrum of paraffin (F). These experimental results are the same as the results shown in Fig. 2. The presence or absence of paraffin precipitation caused by the difference of the lubricant oil or the operating condition of the refrigeration circuit is shown in Table 1.

**[Table 1]**

| Lubricating oil | POE | | PAG | | |
|---|---|---|---|---|---|
| Operating Condition | Before Operation | High-Speed High-Load | Before Operation | Low-Speed High-Load | High-Speed High-Load |
| Sample | (A) | (B) | (C) | (D) | (E) |
| Existence of Disposition of Paraffin | No | No | No | No | Yes |

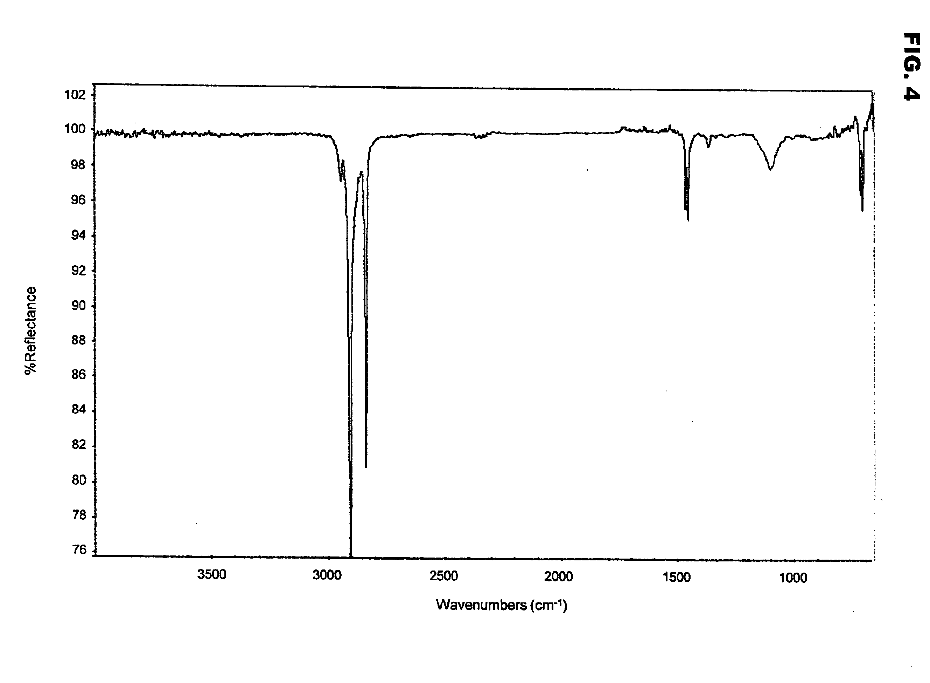

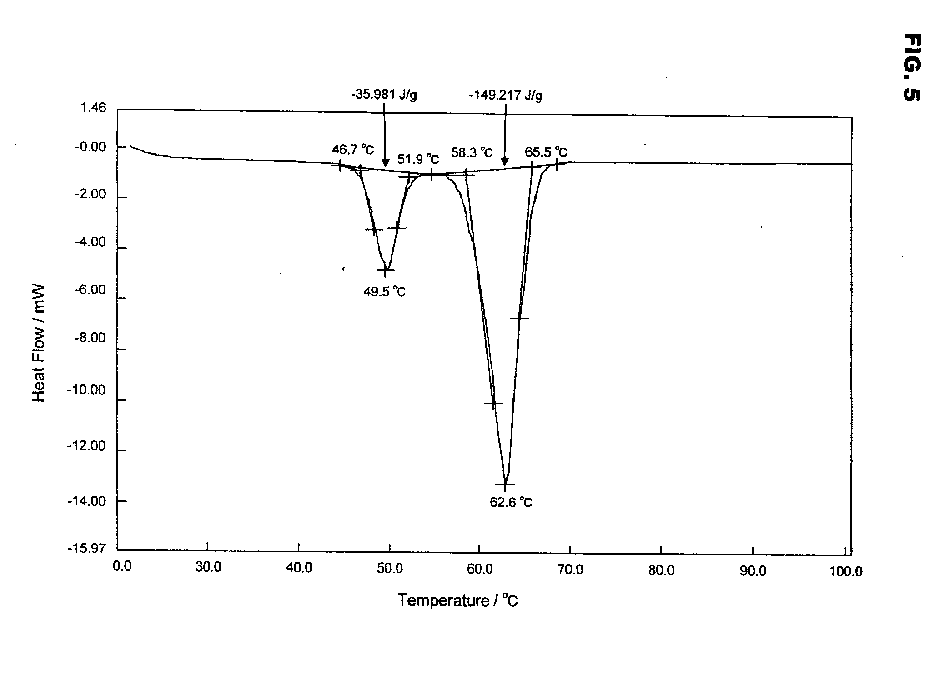

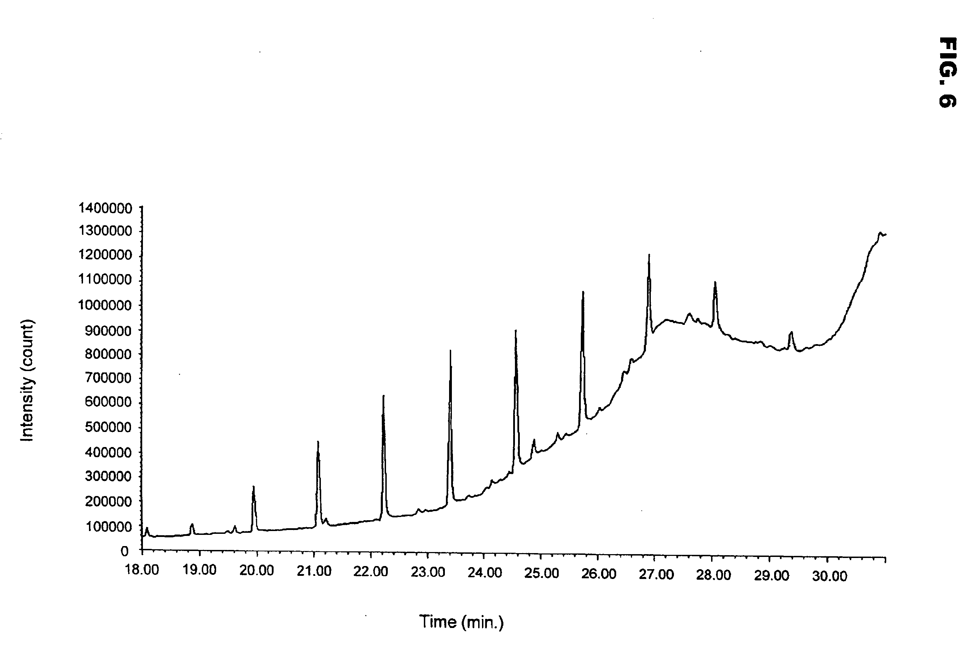

Fig. 2, Fig. 3, Fig. 4, Fig. 5, Fig. 6 and Table 2 show more specific results of analysis of the paraffin sample (F) taken after the experiment of sample (E). Fig. 2, Fig. 3 and Fig. 4 depict the results of FT-IR analysis of the paraffin sample (F). As aforementioned, the IR absorption spectrum of paraffin sample (F) has a characteristic peak near 720-730 cm⁻¹, and other absorption near 2920 cm⁻¹, 2850 cm⁻¹, 1470 cm⁻¹ and 1460 cm⁻¹ are also shown in the spectrum. Fig. 5 shows the result of DSC (Differential Scanning Calorimetry) analysis of the paraffin sample (F). Fig. 5 indicates that the melting temperature of the paraffin sample (F) is in a range of 46-65 °C, and the peak melting temperatures are 49.5 °C and 62.6 °C. Fig. 6 shows a GC-MS (Gas Chromatograph Mass Spectrometry) chart of the paraffin sample (F). According to Fig. 6, a number of compounds with a nearly constant mass difference show peaks in the chart, and a group of saturated hydrocarbons with a molecular weight distribution shown in Table 2 is included in the paraffin sample (F).

**[Table 2]**

| Retention Time (min) | Name | Chemical Formula | CAS | Molecular Weight |
|---|---|---|---|---|
| 18.878 | Pentacosane | C25H52 | 629-99-2 | 352.4 |
| 19.942 | Hexacosane | C26H54 | 630-01-3 | 366.4 |
| 21.095 | Heptacosane | C27H56 | 593-49-7 | 380.4 |
| 22.218 | Octacosane | C28H58 | 630-02-4 | 394.4 |
| 23.401 | Nonacosane | C29H60 | 630-03-5 | 408.4 |
| 24.554 | Triacosane | C30H62 | 638-68-6 | 422.4 |
| 25.737 | Hentriacosane | C31H64 | 630-04-6 | 436.4 |
| 26.89 | Dotriacosane | C32H66 | 544-85-4 | 450.4 |
| 28.072 | Tritriacosane | C33H68 | 630-05-7 | 464.4 |
| 29.373 | Tetratriacosane | C34H70 | 14617-59-0 | 478.4 |

### Industrial Applications of the Invention

The refrigeration circuit according to the present invention is applicable to any refrigeration circuit, and specifically, is suitable as a refrigeration circuit used in an air conditioning system for vehicles provided with a compressor for compressing refrigerant using R1234yf as refrigerant.

### Explanation of symbols

- 1:: refrigeration circuit
- 2:: compressor
- 3:: condenser
- 4:: expansion valve as depressurizing/expanding means
- 5:: evaporator

## Claims

1. A refrigeration circuit provided with a scroll compressor for compressing a refrigerant, **characterized in that** R1234yf is used as said refrigerant, and a polyol ester is used as a lubricating oil for said refrigeration circuit.

2. The refrigeration circuit according to claim 1, wherein main constituent of said polyol ester is a compound having no ether bond.

3. The refrigeration circuit according to claim 1 or 2, wherein said lubricating oil also contains a compound having an ether bond.

4. The refrigeration circuit according to any one of claims 1 to 3, wherein said polyol ester is a hindered ester.

5. The refrigeration circuit according to claim 4, wherein said polyol ester is an ester of at least one compound selected from the group consisting of neopentyl glycol, trimethylolethane, trimethylolpropane, trimethylolbutane, pentaerythritol and dipentaerythritol.

6. The refrigeration circuit according to any one of claims 1 to 5, wherein polyol ester is an ester of at least one compound selected from the group consisting of linear or branched fatty acids having a carbon number in a range of 5 to 18.

7. The refrigeration circuit according to any one of claims 1 to 6, wherein said lubricating oil contains an additive.

8. The refrigeration circuit according to claim 7, wherein said additive comprises at least one additive agent selected from the group consisting of an extreme pressure agent, an acid capturing agent, an antioxidant and a metal deactivating agent.

9. Use of the refrigeration circuit according to any one of claims 1 to 8in an air conditioning system for vehicles.

## Patentansprüche

1. Kältekreislauf bereitgestellt mit einem Scroll-Kompressor zum Verdichten eines Kältemittels, **dadurch gekennzeichnet, dass** R1234yf als besagtes Kältemittel verwendet wird und ein Polyolester als ein Schmieröl für besagten Kältekreislauf verwendet wird.

2. Kältekreislauf gemäß Anspruch 1, wobei der Hauptbestandteil des besagten Polyolesters eine Verbindung ist, die keine Etherbindung aufweist.

3. Kältekreislauf gemäß Anspruch 1 oder 2, wobei besagtes Schmieröl auch eine Verbindung mit einer Etherbindung enthält.

4. Kältekreislauf gemäß irgendeinem der Ansprüche 1 bis 3, wobei besagter Polyolester ein gehinderter Ester ist.

5. Kältekreislauf gemäß Anspruch 4, wobei besagter Polyolester ein Ester von mindestens einer Verbindung ausgewählt aus der Gruppe bestehend aus Neopentylglykol, Trimethylolethan, Trimethylolpropan, Trimethylolbutan, Pentaerythritol und Dipentaerythritol ist.

6. Kältekreislauf gemäß irgendeinem der Ansprüche 1 bis 5, wobei Polyolester ein Ester von mindestens einer Verbindung ausgewählt aus der Gruppe bestehend aus linearen oder verzweigten Fettsäuren mit einer Kohlenstoffzahl in einem Bereich von 5 bis 18 ist.

7. Kältekreislauf gemäß irgendeinem der Ansprüche 1 bis 6, wobei besagtes Schmieröl ein Additiv enthält.

8. Kältekreislauf gemäß Anspruch 7, wobei besagtes Additiv mindestens ein Zusatzmittel ausgewählt aus der Gruppe bestehend aus einem Hochdruckzusatz, einem Säurefänger, einem Antioxidans und einem Metalldesaktivator umfasst.

9. Verwendung des Kältekreislaufs gemäß irgendeinem der Ansprüche 1 bis 8 in einer Klimaanlage für Fahrzeuge.

## Revendications

1. Circuit de réfrigération comportant un compresseur en roulement pour compresser un fluide réfrigérant,
**caractérisé en ce que**
l'on utilise R1234yf comme réfrigérant et un polyol ester comme huile de lubrification du circuit de réfrigération.

2. Circuit de réfrigération selon la revendication 1,
**caractérisé en ce que**
le composant principal du polyol ester est un composant sans liaison éther.

3. Circuit de réfrigération selon la revendication 1 ou 2,
**caractérisé en ce que**
l'huile de lubrification contient également un composant ayant une liaison éther.

4. Circuit de réfrigération selon l'une des revendications 1 à 3,
**caractérisé en ce que**
le polyol ester est un ester bloqué.

5. Circuit de réfrigération selon la revendication 4,
**caractérisé en ce que**
le polyol ester est un ester d'au moins un composant choisi dans le groupe comprenant le neopentyl glycol, le trimethylolethane, le trimethylolpropane, le trimethylolbutane, le pentaerythritol et le dipentaerythritol.

6. Circuit réfrigérant selon l'une des revendications 1 à 5,
**caractérisé en ce que**
le polyol ester est un ester d'au moins un composant choisi dans le groupe comprenant des acides gras linéaires ou ramifications ayant un nombre de carbones de l'ordre de 5 à 18.

7. Circuit réfrigérant selon l'une des revendications 1 à 6,
**caractérisé en ce que**
l'huile de lubrification contient un additif.

8. Circuit réfrigérant selon la revendication 7,
**caractérisé en ce que**
l'additif comporte au moins un agent additif choisi dans le groupe, comprenant un agent de pression extrême, un agent de capture d'acides, un antioxydant et un agent de neutralisation de métal.

9. Utilisation du circuit de réfrigération selon l'une des revendications 1 à 8 dans un système de conditionnement d'air de véhicule.
